# EUROPEAN PATENT SPECIFICATION

(11) **EP 0 826 250 B1**
(45) Date of publication and mention of the grant of the patent: **27.03.2002**
(21) Application number: 96914514.3
(22) Date of filing: 14.05.1996
(51) Int. Cl.: H01Q 3/34

(54) **AN ANTENNA DEVICE WITH TWO RADIATING ELEMENTS HAVING AN ADJUSTABLE PHASE DIFFERENCE BETWEEN THE RADIATING ELEMENTS**
ANTENNE MIT ZWEI STRAHLERELEMENTEN MIT EINER EINSTELLBAREN PHASENDIFFERENZ ZWISCHEN DEN STRAHLERELEMENTEN
ANTENNE A DEUX ELEMENTS RAYONNANTS A DIFFERENCE DE PHASE REGLABLE

(30) Priority: 16.05.1995 SE 9501830
(43) Date of publication of application: 04.03.1998
(73) Proprietor: ALLGON AB, 184 25 Akersberga (SE)
(72) Inventor: ARIAS, Mario, S-186 50 Vallentuna (SE); JONSSON, Stefan, S-128 34 Skarpnäck (SE)
(74) Representative: Modin, Jan
(86) International application number: SE9600627
(87) International publication number: WO9637009

(56) References cited:
- US-A- 3 611 400
- US-A- 4 427 984
- US-A- 4 713 670

## Description

### FIELD AND BACKGROUND OF THE INVENTION

The present invention relates to a radio communication antenna device with two radiating elements or groups of radiating elements, the signal phase difference of which is adjustable. More specifically the invention relates to an antenna device with two radiating elements or groups of radiating elements interacting to produce a directional radiation beam, the direction of which being selectable or adjustable through adjusting said phase difference. The invention may even be applied to direct beams from omni-directional or 360° radiating elements.

### PRIOR ART

A phase-variable antenna device of the kind stated in the preamble of claim 1 is previously known from US-A-4,427,984. The known device includes a second transmission line which is interconnected between the impedance transformers and which is connected to a first transmission line.

However, in'directional beam antenna devices in, e.g., a cellular telephone system it may be desirable to use antennas which may be adjusted to or pre-set at a specific beam direction or tilt in order to make an efficient use of radiated energy and to provide efficient reception of incident radiation. A mechanical/geometric adjustability of the antenna means is known in the prior art, but, in the case of a multi-radiator antenna device, an electrical adjustability is more suitable with regard to, e.g., steady mounting of the antenna device. However, electrically adjustable prior art devices require a rather complicated design and permits small variations only in the manufacture and assembly of the antenna device. An electrically adjustable beam antenna device is disclosed in Patent Abstracts of Japan relating to Japanese Patent Application No. 63-134241. That device includes means for varying delays in feed lines to different radiating elements in an array.

### SUMMARY OF THE INVENTION

It is a main object of the invention to provide an antenna device according to the introductory portion of claim 1, wherein a selectability of the phase difference is achieved and the number and/or lengths of connecting cables/feed transmission lines are reduced. The reduction of the number of cables generally leads to a smaller required number of transformer housings as well. Another object is to reduce the number of components of the antenna device by integration of components. Another object is to provide a mechanically durable and electrically well-defined antenna device. Another object is to provide (identical or a pre-defined set of) modular antenna devices that may be assembled into a variety of antenna configurations exhibiting different parameters and performances. Another object is to provide an antenna device suitable for radio communication, e.g., cellular telephone systems operating at ultrahigh frequencies or higher, where great care in component selection and placement is required. An antenna device with a combination of the above features is more efficient regarding materials, manufacture, and assembly than prior art antenna devices.

These and other objects are attained in an antenna device according to the characterizing portion of the appended claims. In fact, only half the number or less of feed transmission lines is required in the antenna device of the invention compared to prior art antenna devices. Below, details and advantages of the present invention will be mentioned and/or further explained.

The first and second radiating elements may, as indicated, consist of more than one radiating element, respectively. Each of the first and second radiating means may consist of a group of radiating means. A signal in the radiating elements of such a group are preferably in phase with each other, but may differ in phase for various interaction effects.

Although described as having one first and one second radiating element, or element groups, it may be advantageous to arrange two or more of the antenna device of the invention, or other radiating elements, in order to obtain interaction resulting in, e.g., a more concentrated radiation beam with a longer range. The principles of arranging a multi-radiator antenna device are known per se, but the antenna device of the invention offers great improvement as outlined above.

The antenna device is to be connected via the first transmission line to a radio transmitting and/or receiving device in a well-known manner. However the connection between the first transmission line and the second transmission line is important in the antenna device of the invention. This connection constitutes substantially a pure current division, since the first transmission has half the characteristic impedance of the second transmission line. Thus, the energy of a signal propagating in the first transmission line toward the contact point is split in equal halves propagating in each direction from the contact point in the second transmission line, and vice versa.

This implies that the choice of contact point effects substantially the length of the signal path only from the contact point to the respective radiating element (or group of radiating elements). Apparently, there is a linear relationship between the position of the contact point on the second transmission line and the phase difference between the signal phase in the radiating elements.

The conductive ground means (reflector), which may be a continuous metal plate ground plane, has a predetermined orientation and position in relation to the first and second radiating elements in order for the radiating elements to give well-defined beam direction and radiation element impedance properties.

The first and second impedance transformer means perform matching of the impedance of the radiating element, in combination with the balun means wherever applicable, to the impedance of the second transmission line.

Each impedance transformer may be formed by a first elongated (possibly including curves or bends) conductive element (possibly formed by part of said conductive ground means) and, extending alongside thereof or substantially parallel thereto and separated from it, a second elongated conductive element, together defining sections with different characteristic impedance along their extension.

The second conductive element may comprise a step in cross-sectional dimensions between two adjacent sections so as to obtain a change of characteristic impedance. The change in characteristic impedance may also be achieved through a change of a dielectric between the conductive elements.

The second transmission line may be formed by a third elongated (possibly including curves or bends) conductive element (possibly formed by part of said conductive ground means) and, alongside thereof or substantially parallel thereto and separated from it, a fourth elongated conductive element.

The second transmission line may have a curved (arced) path in a plane perpendicular to the first transmission line partly encircling one conductor of the first transmission line.

The radiating elements of the antenna device or group of antenna devices may be arranged in an substantially plane and orthogonal matrix with a radiator center-to-center distance in one dimension being approximately one wavelength or less, 0.9-1.0 wavelengths being a preferred value range.

The first and second radiating element, the first and second transformers, and the second transmission line may together form one structural unit mounted on the conductive ground means.

The first and third connecting means of the first and second impedance transformers may be coupled via first and second balun means to the first and second radiating elements, respectively.

The radiating elements and/or the elongated conductive elements may be comprised of single metal plate element(s).

The second transmission line may be provided with marks indicating possible positions of the contact point each giving a predetermined phase difference in the signal between the first and second radiating elements.

The second transmission line may have at least an electrical length of substantially equal to or less than one eighth of a wavelength.

The radiating elements may advantageously be oriented in the same direction (of polarization or phase).

### BRIEF DESCRIPTION OF THE DRAWINGS

Fig. 1 shows a top view of an antenna device according to the invention mounted on a ground plane (not shown) and to be connected to a first transmission line, including two groups of radiating dipole elements, balun means, impedance transformers, and a second transmission line, formed from essentially two formed metal plate elements.
Fig. 2 shows a first side view of the antenna device of fig. 1.
Fig. 3 shows a second side view of the antenna device of fig. 1 indicating also the ground plane on which the antenna device is mounted.
Fig. 4 shows a perspective view with a cut-away section and a partial enlargement of another antenna device according to the invention to be connected to a first transmission line, including a ground plane, two radiating microstrip patch elements on a substrate parallel to and spaced from the ground plane, impedance transformers, and a second transmission line.

### DETAILED DESCRIPTION OF PREFERRED EMBODIMENTS OF THE INVENTION

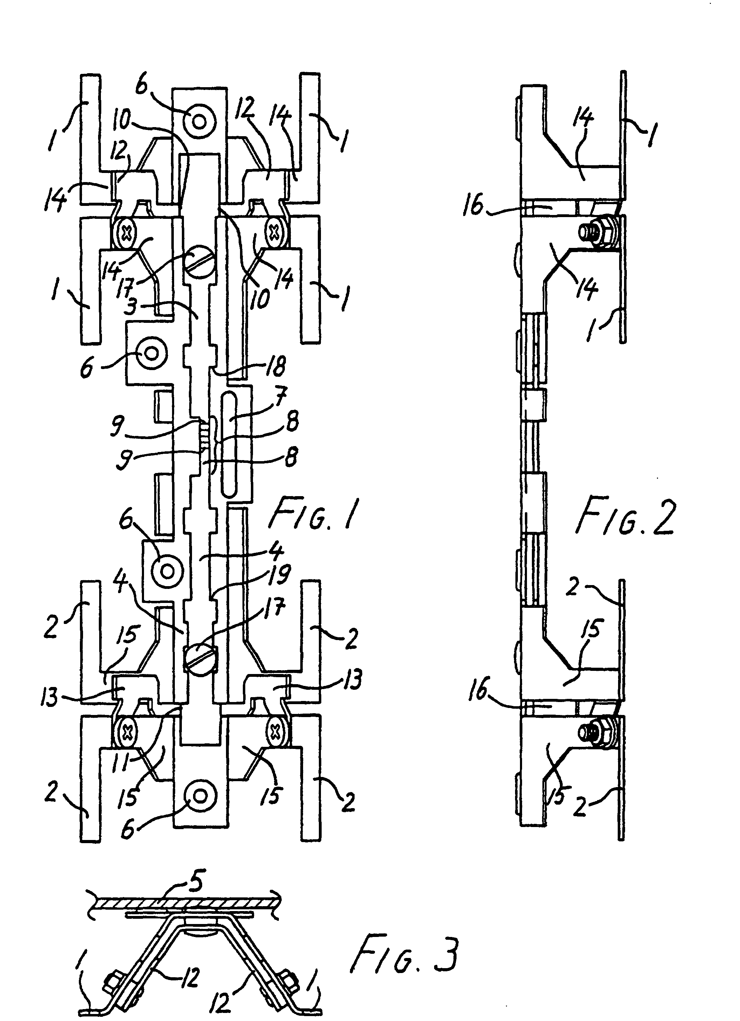

With reference to figs. 1-3 an antenna device is described having two first radiating dipole means 1, fed in phase and separated by less than one half wavelength and being parallel to each other, and two second radiating dipole means 2, fed in phase and each being oriented aligned with a respective one of the first radiating elements 1 at a center-to-center distance in the order of one half wavelength. Each dipole 1, 2 has a length of approximately one half wavelength and is oriented parallel to a conductive ground plane reflector 5 at a distance of approximately one quarter of a wavelength.

The first and second radiating elements 1, 2 are fed from first and second impedance transformers 3, 4, via first and second balun means 12 and 14, 13 and 15, respectively. The first and second impedance transformers are interconnected by a second transmission line 8.

The dipoles 1, 2, parts 14, 15 of the balun means, and ground conductors of the impedance transformers 3, 4 and the second transmission line 8 are formed (punched) from one first metal plate constituting a bottom portion of the antenna device. This bottom portion is provided with relatively low downwards projecting warts 6 which are fastened to the reflector 5 with screws and nuts (not shown) for well-defined electrical contact points, adjacent ones of which are to be separated by less than one half wavelength.

Parts 12, 13 of the balun means, signal parts of the impedance transformers 3, 4, and of the second transmission line 8 are formed by one second metal plate constituting a top portion of the antenna device fastened to a lower part of the bottom portion and, parallel to and spaced from the bottom portion, by non-conductive fastening elements 17 and at the balun means with conductive fastening means. To be advantageous in large scale manufacturing, the second plate may be produced by punching.

The upper part of the first and second impedance transformers 3, 4 have widths varying in steps 18, 19, respectively, along their extension providing different characteristic impedance in sections, which allow an effective impedance match between the balun means, connected to the antenna, and the second transmission line 8, having a characteristic impedance of 100 ohms. A first transmission line (not shown) to be connected to the antenna means is a 50 ohms coaxial line. It is to be mounted in a grounding and fastening block (not shown) that can be fastened and grounded at any point along a slot 7 in the bottom portion. The center conductor of the coaxial line is to be soldered at any position along the upper part of the second transmission line 8, that position determining the phase difference of the signal at the first and second radiating elements 1, 2. There are marks 9 on the second transmission line 8 for guiding in the selection of an intended phase difference.

Further antenna devices of the type shown in figs. 1-3 may be arranged (in a matrix) on the same ground plane (reflector) to interact with the radiators of the first antenna device similarly to the way these interact with each other.

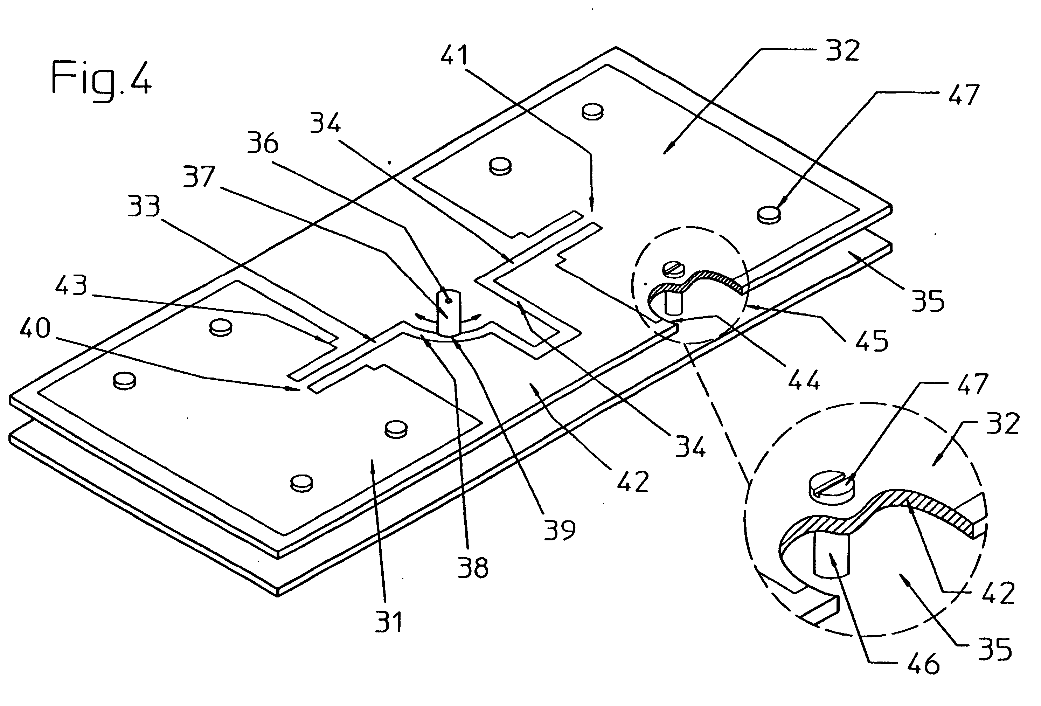

With reference to fig. 4 an antenna device is described formed by partly microstrip printed circuits on a plane non-conductive substrate 42 including a first radiating patch element 31 fed at 40 by a first impedance transformer 33, 43 connecting and matching the first patch element 31 to an arced transmission line 38 of 100 ohms connected to a second impedance transformer 34 that matches the second transmission line 38 and a second radiating patch element 32 connected at 41, a second radiating patch element 32 oriented in a mirror-like fashion in relation to the first radiating patch element 31, partly a conductive reflector 35 supporting the substrate 42 on equal separating and fastening means 46, 47. A coaxial feed line is entered perpendicularly to the substrate and is contacted to the second transmission line via its center conductor 36 and a segment 37 to a point 39 determining the phase difference, all in a similar way to what is said above. For clarity fig. 4 includes a cut-away portion 44 and an enlarged portion 45.

## Claims

1. An antenna device to be connected to a first transmission line with a first characteristic impedance Z1, said antenna device comprising:
- at least one first radiating element (1);
- at least one second radiating element (2);
- a first impedance transformer means (3) having first and second connecting means, said first connecting means being coupled to said first radiating element;
- a second impedance transformer means (4) having third and fourth connecting means, said third connecting means being coupled to said second radiating element,
**characterized in that**
- said first impedance transformer means (3) exhibits at said second connecting means, and said second impedance transformer (4) means exhibits at said fourth connecting means, a substantially equal and substantially resistive first impedance R1 being substantially equal to twice said first characteristic impedance Z1;
- said second and fourth connecting means are interconnected by an elongated second transmission line (8) having a second characteristic impedance Z2 being substantially equal to said first impedance R1; and
- said first transmission line is connectable to said elongated second transmission line at a contact point at any position along the second transmission line, which contact point is selected so as to achieve a desired signal phase difference between said first and second radiating elements.

2. An antenna device according to claim 1 or any of the dependent claim(s), **characterized in that** said antenna device further comprises a conductive ground means (5), which has a predetermined orientation and position in relating to said first and second radiating elements (1,2).

3. An antenna device according to claim 1 or any of the dependent claim(s), **characterized in that** each impedance transformer (3,4) is formed by a first elongated conductive element and, alongside thereof and separated from it, a second elongated conductive element, together defining sections with different characteristic impedances along their extension.

4. An antenna device according to claim 1 or any of the dependent claim(s), **characterized in that** said second elongated transmission line (8) is formed by a third elongated conductive element and, alongside thereof and separated from it, a fourth elongated conductive element.

5. An antenna device according to claim 1 or any of the dependent claim(s), **characterized in that** said second elongated transmission line (38) has a curved path in a plane perpendicular to said first transmission line (36,37) partly encircling one conductor of said first transmission line.

6. An antenna array composed by at least one antenna device according to claim 1 or any of the dependent claim(s), **characterized in that** said radiating elements of said antenna device(s) are arranged in a substantially planar and orthogonal matrix with a center-to-center distance in one dimension being in the order of one wavelength.

7. An antenna device according to claim 1 or any of the dependent claim(s), **characterized in that** said first and second radiating elements (1,2), said first and second transformers (3,4), and said second transmission line (8) together form one structural unit mounted on said conductive ground means (5).

8. An antenna device according to claim 1 or any of the dependent claim(s), **characterized in that** said first and third connecting means of said first and second impedance transformers (3,4) are coupled via first and second balun means (12,14,13,15) to said first and second radiating elements (1,2), respectively.

9. An antenna device according claim 7, **characterized in** said structural unit comprises a single metal plate element(s).

## Patentansprüche

1. Antenneneinrichtung, welche mit einer ersten Übertragungsleitung mit einer ersten Kennimpedanz Z1 verbindbar ist, wobei die Antenneneinrichtung folgende Merkmale aufweist:
wenigstens ein erstes Strahlungselement (1),
wenigstens ein zweites Strahlungselement (2),
wenigstens eine Impedanzwandlereinrichtung (3), die eine erste und eine zweite Anschlußeinrichtung aufweist, wobei die erste Anschlußeinrichtung mit dem ersten Strahlungselement verbunden ist,
eine zweite Impedanzwandlereinrichtung (4) mit einer dritten und einer vierten Anschlußeinrichtung, wobei die dritte Anschlußeinrichtung mit dem zweiten Strahlungselement verbunden ist,
**dadurch gekennzeichnet, daß**
die erste Impedanzwandlereinrichtung (3) an der zweiten Anschlußeinrichtung und die zweite Impedanzwandlereinrichtung (4) an der vierten Anschlußeinrichtung eine im wesentlichen gleiche und im wesentlichen ohmsche erste Impedanz R1 zeigt, die im wesentlichen gleich oder zweimal die erste Kennimpedanz Z 1 ist,
wobei die zweite und die vierte Anschlußeinrichtung über eine längliche zweite Übertragungsleitung (8) verbunden sind, die eine zweite Kennimpedanz Z2 hat, die im wesentlichen gleich der ersten Impedanz R1 ist und
die erste Übertragungsleitung mit der länglichen zweiten Übertragungsleitung bei einem Kontaktpunkt bei einer beliebigen Position entlang der zweiten Übertragungsleitung verbindbar ist, wobei der Kontaktpunkt so gewählt ist, daß eine gewünschte Signalphasendifferenz zwischen dem ersten und dem zweiten Strahlungselement erreicht wird.

2. Antenneneinrichtung nach Anspruch 1 oder einem der abhängigen Ansprüche, **dadurch gekennzeichnet, daß** die Antenneneinrichtung ferner eine leitende Masseeinrichtung (5) aufweist, die eine vorgegebene Orientierung und Position in bezug auf das erste und das zweite Strahlungselement (1, 2) aufweist.

3. Antenneneinrichtung nach Anspruch 1 oder einem der abhängigen Ansprüche, **dadurch gekennzeichnet, daß** jeder Impedanzwandler (4) durch ein erstes längliches leitendes Element und an dessen Längsseite und getrennt von diesem ein zweites längliches leitendes Element gebildet ist, die gemeinsam Abschnitte mit verschiedenen Kennimpedanzen entlang ihrer Erstreckung definieren.

4. Antenneneinrichtung nach Anspruch 1 oder einem der abhängigen Ansprüche, **dadurch gekennzeichnet, daß** die zweite längliche Übertragungsleitung (8) gebildet ist durch ein drittes längliches leitendes Element und an dessen Längsseite und mit Abstand zu diesem ein viertes längliches leitendes Element.

5. Antenneneinrichtung nach Anspruch 1 oder einem der vorangehenden Ansprüche, **dadurch gekennzeichnet, daß** die zweite längliche Übertragungsleitung (38) einen gekrümmten Weg in einer Ebene aufweist, die senkrecht zu der ersten Übertragungsleitung (36, 37) ist, und einen Leiter der ersten Übertragungsleitung teilweise umgibt.

6. Antennenanordnung bestehend aus wenigstens einer Antenneneinrichtung gemäß Anspruch 1 oder einem der abhängigen Ansprüche, **dadurch gekennzeichnet, daß** die Strahlungselemente der Antenneneinrichtung(en) in einer im wesentlichen ebenen und orthogonalen Matrix mit einem Abstand von Mitte zu Mitte angeordnet sind, der eine Abmessung in der Größenordnung einer Wellenlänge aufweist.

7. Antenneneinrichtung nach Anspruch 1 oder einem der abhängigen Ansprüche, **dadurch gekennzeichnet, daß** das erste und das zweite Strahlungselement (1, 2), der erste und der zweite Wandler (3, 4) und die zweite Übertragungsleitung (8) zusammen eine strukturelle Einheit bilden, die auf der leitenden Masseeinrichtung (5) angebracht ist.

8. Antenneneinrichtung nach Anspruch 1 oder einem der abhängigen Ansprüche, **dadurch gekennzeichnet, daß** die erste und dritte Verbindungseinrichtung des ersten und des zweiten Impedanzwandlers (3, 4) über eine erste und eine zweite Impedanzanpassungswandler-Einrichtung (12, 14, 13, 15) mit dem ersten bzw. dem zweiten Strahlungselement (1, 2) verbunden ist.

9. Antenneneinrichtung nach Anspruch 7, **dadurch gekennzeichnet, daß** die strukturelle Einheit ein einzelnes Metallplattenelement(e) umfaßt.

## Revendications

1. Dispositif d'antenne à connecter à une première ligne de transmission ayant une première impédance caractéristique Z1, le dit dispositif d'antenne comprenant :
au moins un premier élément rayonnant (1) ;
au moins un deuxième élément rayonnant (2) ;
un premier transformateur d'impédance (3) ayant un premier et un deuxième moyens de connexion, le dit premier moyen de connexion étant couplé au dit premier élément rayonnant ;
un deuxième transformateur d'impédance (4) ayant un troisième et un quatrième moyens de connexion, le dit troisième moyen de connexion étant couplé au dit deuxième élément rayonnant,
**caractérisé en ce que**
le dit. premier transformateur d'impédance (3) possède à l'endroit du dit deuxième moyen de connexion, et le dit deuxième transformateur d'impédance (4) possède à l'endroit du dit quatrième moyen de connexion, une première impédance R1 sensiblement égale et sensiblement résistive qui est sensiblement égale au double de la dite première impédance caractéristique Z1 ;
les dits deuxième et quatrième moyens de connexion sont interconnectés par une deuxième ligne de transmission allongée (8) ayant une deuxième impédance caractéristique Z2 qui est sensiblement égale à la dite première impédance R1 ; et
la dite première ligne de transmission est connectable à la dite deuxième ligne de transmission allongée, à l'endroit d'un point de contact situé à une position quelconque le long de la deuxième ligne de transmission, ce point de contact étant choisi de façon à obtenir une différence de phase de signal désirée entre les dits premiers et deuxièmes éléments rayonnants.

2. Dispositif d'antenne selon la revendication 1 ou une quelconque des revendications dépendantes, **caractérisé en ce que** le dit dispositif d'antenne comprend en outre un moyen conducteur de mise à la terre (5), qui a une orientation et une position prédéterminées par rapport aux dits premiers et deuxièmes éléments rayonnants (1, 2).

3. Dispositif d'antenne selon la revendication 1 ou une quelconque des revendications dépendantes, **caractérisé en ce que** chaque transformateur d'impédance (3, 4) est constitué par un premier élément conducteur allongé et, le long de celui-ci et séparé de celui-ci, un deuxième élément conducteur allongé, définissant ensemble des sections ayant des impédances caractéristiques différentes, sur leur longueur.

4. Dispositif d'antenne selon la revendication 1 ou une quelconque des revendications dépendantes, **caractérisé en ce que** la dite deuxième ligne de transmission allongée (8) est formée par un troisième élément conducteur allongé et, le long de celui-ci et séparé de celui-ci, un quatrième élément conducteur allongé.

5. Dispositif d'antenne selon la revendication 1 ou une quelconque des revendications dépendantes, **caractérisé en ce que** la dite deuxième ligne de transmission allongée (38) a un chemin courbe dans un plan perpendiculaire à la dite première ligne de transmission (36, 37), encerclant partiellement un conducteur de la dite première ligne de transmission.

6. Agencement d'antenne composé d'au moins un dispositif d'antenne selon la revendication 1 ou une quelconque des revendications dépendantes, **caractérisé en ce que** les dits éléments rayonnants du ou des dispositifs d'antenne sont agencés en une matrice sensiblement plane et orthogonale ayant une distance de centre à centre dans une dimension qui est de l'ordre d'une longueur d'onde.

7. Dispositif d'antenne selon la revendication 1 ou une quelconque des revendications dépendantes, **caractérisé en ce que** les dits premiers et deuxièmes éléments rayonnants (1, 2), les dits premier et deuxième transformateurs (3, 4) et la dite deuxième ligne de transmission (8) constituent ensemble une unité structurelle montée sur le dit moyen conducteur de mise à la terre (5).

8. Dispositif d'antenne selon la revendication 1 ou une quelconque des revendications dépendantes, **caractérisé en ce que** les dits premiers et troisièmes moyens de connexion des dits premier et deuxième transformateurs d'impédance (3, 4) sont couplés via des premiers et deuxièmes moyens de couplage symètrique-dissymètrique (12, 14, 13, 15) aux dits premiers et deuxièmes éléments rayonnants (1, 2), respectivement.

9. Dispositif d'antenne selon la revendication 7, **caractérisé en ce que** la dite unité structurelle comprend un ou des éléments de plaque métallique unique.
